# EUROPEAN PATENT SPECIFICATION

(11) **EP 0 891 530 B1**
(45) Date of publication and mention of the grant of the patent: **21.11.2001**
(21) Application number: 97905925.0
(22) Date of filing: 12.02.1997
(51) Int. Cl.: F28F 21/02, C04B 35/83

(54) **MANUFACTURING METHOD FOR A CARBON/CARBON HEAT EXCHANGER**
VERFAHREN ZUR HERSTELLUNG EINES KOHLENSTOFF/KOHLENSTOFF WÄRMETAUSCHERS
PROCEDE DE FABRICATION D'UN ECHANGEUR DE CHALEUR EN COMPOSITE CARBONE-CARBONE

(30) Priority: 12.04.1996 US 601754
(43) Date of publication of application: 20.01.1999
(73) Proprietor: Honeywell International Inc., Morristown, New Jersey 07962-2245 (US)
(72) Inventor: ANDERSON, Alexander, F., Rolling Hills Estates, CA 90274 (US); DEWAR, Douglas, M., Rolling Hills Estates, CA 90274 (US); DUNCAN, Christopher, K., Long Beach, CA 90808 (US); FELLMAN, Michael, Danville, CA 94062 (US); GOLECKI, Ilan, Parsippany, NJ 07054 (US); MAUDRU, William, F., Redwood City, CA 94062 (US); WALKER, Terence, B., South Bend, IN 46619 (US); XUE, Liang, Randolph, NJ 07869 (US)
(74) Representative: Hucker, Charlotte Jane
(86) International application number: US9702232
(87) International publication number: WO9730321

(56) References cited:
- EP-A- 0 121 797
- EP-A- 0 251 301
- DE-A- 3 327 659
- US-A- 5 380 556
- US-A- 5 418 063

## Description

This invention relates to a method of fabricating a parallel plate heat exchanger of carbon/carbon composite material comprising the steps of the preamble of claim 1. Such a method is disclosed in DE-A-33 27 659.

### Background

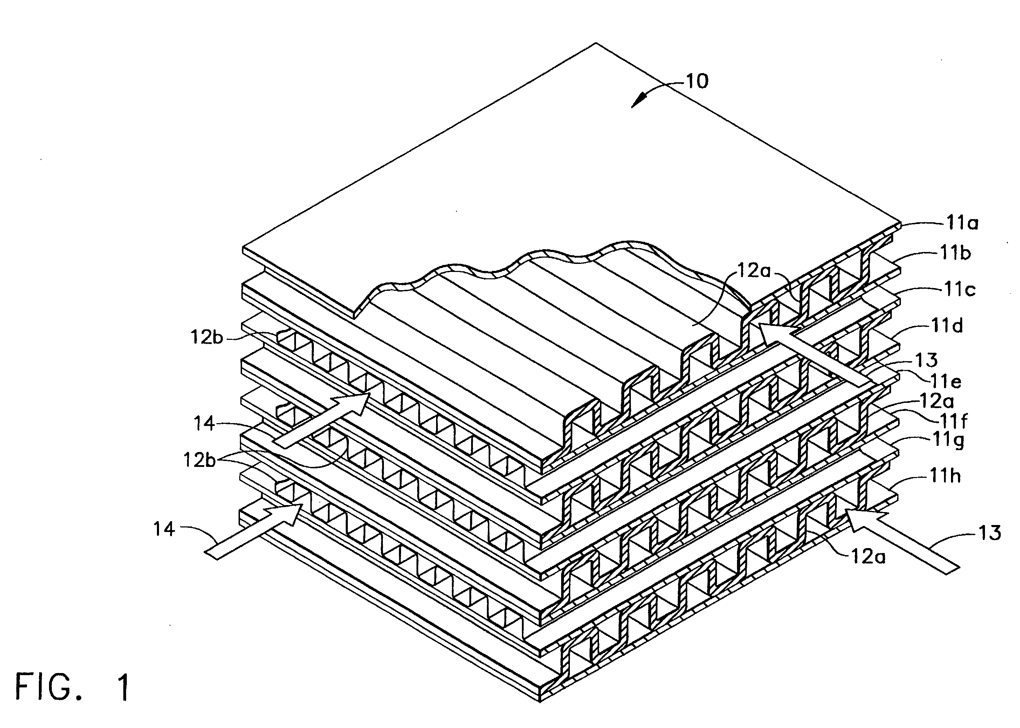

In two fluid, parallel plate type heat exchangers, shown for instance in Fig. 1, the heat exchanger 10 can be constructed of metal parts, such as metal plates 11a-11h and fins 12a and 12b. Typically a hot fluid flows between first and second adjacent plates 11a -11b respectively and transfers heat to the plates. This will be referred to as the hot passageway 13. A cold passageway 14, transverse or parallel (not shown) to the hot passageway 13 is constructed on the opposite side of the second plate 11b. A second and cooler fluid flows in this passageway 14. These hot and cold passageways can be alternated to form a stacked array. Metal fins 12 are provided between adjacent plates 11 to assist the transfer of heat from the fluid in the hot passageway 13 through the plate 11 to the cold fluid in the second passageway 14. These fins 12 can be bonded to the plates 11 providing extended heat transfer area and preferably contribute structural support to contain the pressurized fluids flowing therethrough. To minimize flow blockage, the fins 12 are typically disposed in parallel with the fluid flow and define a flow path with minimum additional flow resistance. In addition, the thickness and number of fins 12 is such to provide a maximum heat transfer area in contact with the fluid. A thin fin 12 satisfies these requirements and many different detailed geometry's are used to best satisfy the specific requirements of any given design problem.

Manufacturing methods for these metal heat exchangers are well established in that the fins 12 are formed in a conventional stamping machine and all parts are brazed to form a complete assembly.

Carbon/carbon materials have been considered unavailable for construction of compact parallel plate heat exchangers. It has been considered impossible to achieve a carbon/carbon fin which is sufficiently thin, sufficiently conductive and that can be formed into an acceptable shape to be effective in transferring heat between two fluids. Also, such a fin must exhibit sufficient strength to support stacked construction and provide a rigid structure for containment of pressurized fluids flowing therethrough.

DE-A-3327659 discloses a method for the manufacture of a composite ceramic body which is both lightweight and structurally rigid, and which is resistant to high temperatures. The body consists of a plane sheet and a profiled sheet, each made of carbon containing material such as carbon fibre, which are joined together. The plane sheet is then shaped as desired and the body is cured before a coking step is carried out. The coked body is impregnated with a silicon-containing compound and then exposed to temperatures sufficient to create silicon carbide. The finished body is suitable for use as a heat exchanger.

### Summary of the Present Invention

It is therefore an object of the present invention to provide method of specially constructing carbon/carbon fins so that the resulting specially constructed fins exhibit a higher thermal conductivity than that exhibited by available metals. The specially constructed carbon/carbon fins thus facilitate the transfer of heat between adjacent plates in parallel plate heat exchangers.

Another object of this invention is to provide a method that also employs a carbon/carbon plate construction in a heat exchanger thereby providing an improved and lightweight heat exchanger. Specific conductivity (thermal conductivity/density ) is a suitable figure of merit for materials used in heat exchanger construction. Aluminum has the highest specific conductivity of all conventional heat exchanger metals with a value of 81 watts per meter K / grams per cubic centimeter. The carbon/carbon materials to be used in this invention have specific conductivity's 1.5 to 2.5 times higher than aluminum.

Another object of the invention is provide a method for curing and pyrolyizing the carbon/carbon materials to increase the rigidity of the carbon/carbon materials to facilitate handling.

Another object of this invention is to a method of carbon vapor deposition required to densify the carbon/carbon heat exchanger structure to eliminate porosity and obtain a material density approximately equal to that of carbon e.g 2.1g/cm3.

Another object of this invention is to provide a method of annealing and heat treat processing at a high temperature to establish desired properties in the carbon/carbon completed assembly such as high thermal conductivity and high strength.

Another object of this invention is to a method of infiltration coating which will occur at the appropriate step in the overall process, to provide sufficient oxidative stability and resistance for the intended high temperature applications.

Accordingly a method of fabricating a parallel plate heat exchanger of carbon *I* carbon composite materials is provided comprising the steps laid out in claim 1, the preamble of which is based on the disclosure in DE-A-3327659. This method preferably involves providing a woven sheet of a material comprised of low modulus pitch carbon fibers, impregnated the woven sheets with an appropriate resin, selected from the class comprising phenolic or epoxy resins, shaping the carbon/carbon sheets to form plate sheets and fins sheets; stacking the fin sheets between parallel plate sheets to achieved a parallel plate assembly, curing the assembly at a modest temperature to bond the plates and fins together, pyrolyzing the assembly by heating the cured structure in an inert atmosphere or vacuum at a rate of 1-5°C/min. to a temperature in the range 900-1000°C for a time in the range of 30 min. to 5 hours, densificating the pyrolyzed assembly structure by chemical vapor infiltration and chemical vapor deposition of carbon, to achieve an overall bulk density in the range 1.70-2.20 g/cm³ and a microstructure of deposited carbon, for example rough-laminar carbon wherein the densification may be carried out in a hot-wall, isothermal, isobaric CVI reactor, at temperatures in the range 900-1100°C; using carbon-containing a vapor comprising constituents selected from the class containing carbon gaseous precursors, methane, ethane, ethylene, propane, butane, pentane, cyclopentane or hexane, annealing in the assembly in the temperature range 1800-3000°C to further improve the physical properties of the structure, by ordering the microstructure of the fiber carbon and the matrix carbon present in the structure to thereby increase the in-plane and through plane components of the thermal conductivity by at least an order of magnitude and thereby obtain the desired mechanical properties and improves the oxidative stability; infiltrating the assembly with coating materials reduce porosity and improve rigidity.

A parallel plate heat exchanger fabricated of carbon / carbon composite materials comprising: first, second and third carbon/carbon plates disposed in substantially parallel spaced relation, first and second plates defining a first fluid flow passageway there between and said second and third plates defining a second fluid flow passageway therebetween, a first plurality of carbon/carbon corrugated fins disposed between said first and second plates of the first passageway to conduct heat from said first passageway to said second plate, a second plurality of carbon/carbon corrugated fins disposed between said second and third plates of the second passageway to conduct heat from said second plate to said first passageway, an overall stack of alternating first and second passageways to form an integrated stacked array of sufficient size to accomplish the desired overall transfer of heat between the two flowing fluids wherein the carbon/carbon plates and the corrugated fins, are formed from thin sheets of woven, low modulus, pitch, carbon fiber of first and second thicknesses respectively and said woven sheets are impregnated with a carbon yielding resin.

### Brief Description of the Drawings

These features and advantages of the invention will become more apparent from the following detailed description taken in conjunction with the accompanying drawings in which:
Fig. 1 is an illustration of a conventional metal parallel plate heat exchanger;
Fig 2. is an illustration of a carbon/carbon parallel plate heat exchanger that can be built in accordance with this present invention;
Figs. 3a and 3b are illustrations of a tools useful for forming fins in a woven carbon based sheet in accordance with this present invention; and
Fig 4. is an illustration of a carbon preform having a weave structure that can be used in the present invention, with Fig. 4a illustrating a plain weave and Fig 4b illustrating an open weave.

### Detailed Description of the Preferred Procedures

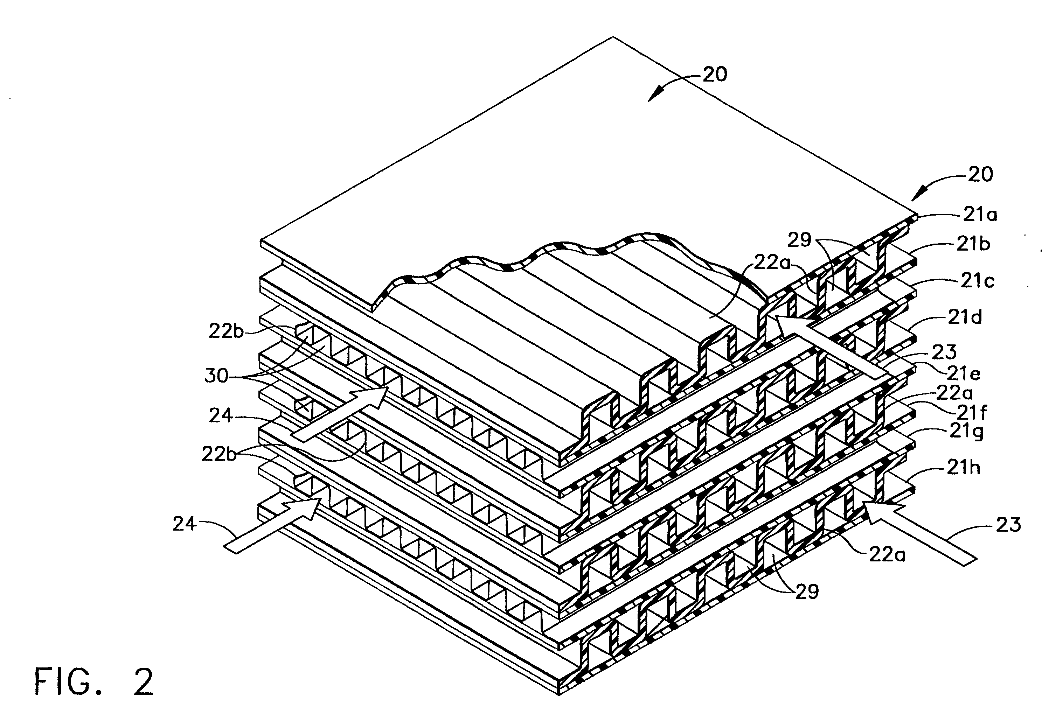

Referring now to Fig 2, a carbon/carbon parallel plate heat exchanger 20 in accordance with this present invention is shown to include a plurality of flat carbon/carbon parallel plates 21. Carbon/carbon fins 22 are disposed between the plate 21 to separate the plates 22 for fluid flow and to add rigidity to the heat exchanger 20 as a whole. It is intended that fluids 23 and 44, such as air or any other fluid, flow between the plates 21 in alternating layers. Thus, fluid 33 flows between plates 21a and 21b while fluid 24 flows between plates 21b and 21c. These two passageways formed by the plates 11 are identified as the hot passageway 29 and the cold passageway 30. The second passageway 30 is most frequently oriented to facilitate the flow of the second fluid 24 transverse to the flow of the first fluid 23 in the first passageway 29. The first and second passageways 29 and 30 may also be oriented in parallel to provide the parallel flow stream arrangement of a counterflow heat exchanger. In this instance special provision must be added to assist the fluid entry and exit. In a preferred embodiment the plates 21 can be stacked to form alternating first and second passageways 29 and 30 until the assembly as a whole provides the required heat transfer or exchange capability.

Fabrication of a compact carbon/carbon parallel plate heat exchanger from carbon based composite materials preferably includes a specific sequence of manufacturing steps described below. Generally the process begins with a material comprised of low modulus pitch carbon fibers which can be readily formed into a shape suitable for either the plate or the fins and then after a heat exchanger core assembly has been constructed from the component parts, the material of the assembled structure is heat treated to obtain a finished core exhibiting the desired properties. Woven sheets are used for the plates 21 and fins 22. The plate 21 can be fabricated from any open weave sheets that the densification treatment (described below) to eliminates substantially all porosity in the plate increase thermal conductivity substantially. The fin sheet 22 can be a tape or cross weave of minimum thickness that can be formed into the desired corrugated fin structure. It is preferred that the thickness of the first woven sheet that can be used for the parallel plate 21 can be in the range of .025 - .05 cm (.010-,020 inches) and the thickness of the second woven sheet that can be used for forming he corrugated fins can be in the range of .0076 - .025 cm (.003-.010 inches).

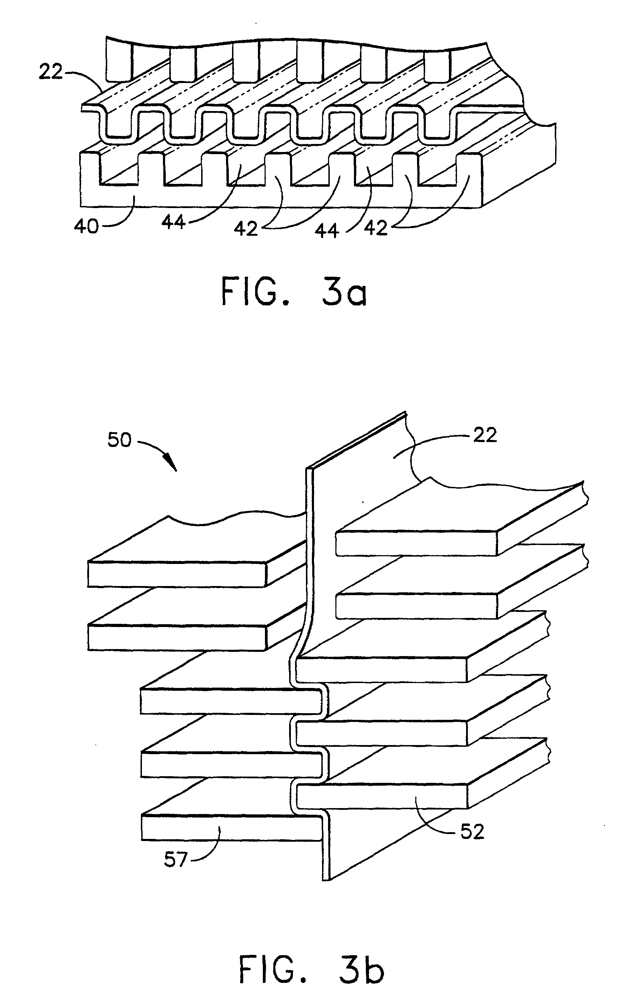

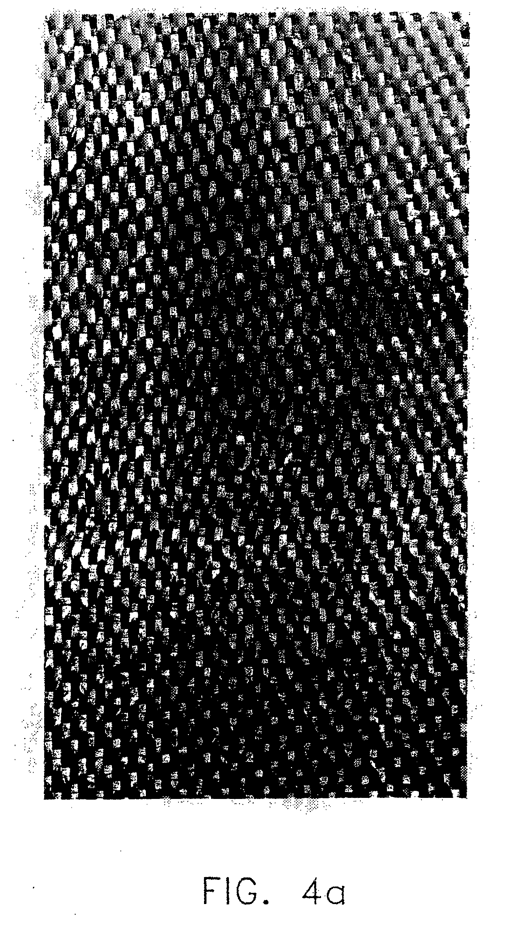

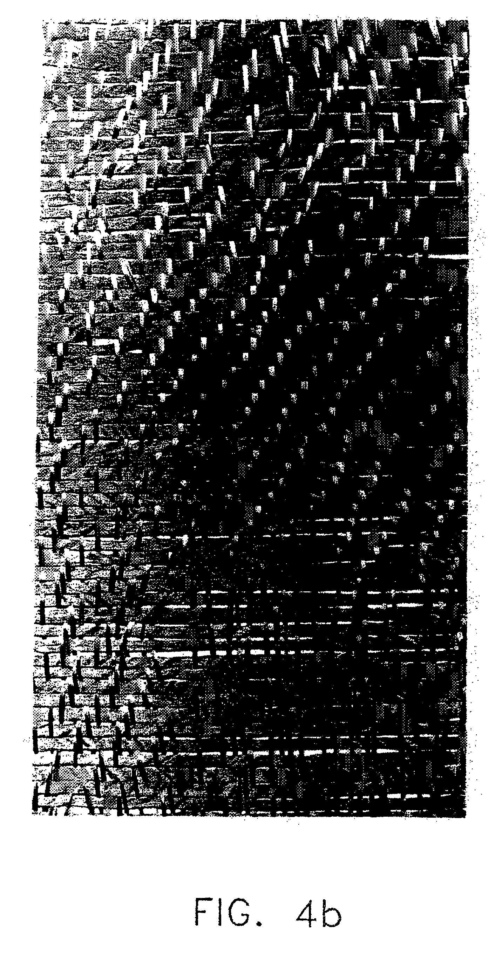

A preferred method of fabrication can comprise the following steps described in detail below. Provide a low modulus pitch carbon fibers which can be readily formed to a shape desired for either the plate or the fins. A preferred perform is a woven sheet of low-cost, low-modulus pitch-based carbon fibers, for example Amoco P30X or Nippon XNC25. The woven mat may be any of several weave configurations selected to give the desired thickness and surface characteristics. For instance a preform illustrated in Fig 4a having a thickness in the range of approximately of .025 - .05 cm (.010- .020 inches) and a plain weave has been found to provide acceptable results for the plates. Fig 4b illustrates a sheet having an open weave and a thickness of in the range of approximately .0076 - .025 cm (.003 - .010) inches that can be used to fin plates in combination with the tools of Figs. 3a and 3b.

Such woven sheets are impregnated with an appropriate resin, for example, phenolic or epoxy novellac by a pressure rolling process in which for instance the sheet is squeezed between opposed rollers. The resin and can applied to the sheet either before of during rolling. The resulting sheets are in a state where they can be handled and formed when they leave the rollers. The quantity of resin is carefully controlled to provide the desired state after pyrolsisi. During pyrolisis the bulk of he resin is burned off and the remainder is converted to carbon. The desired quantify of resin residue is no more than approximately 20% of the original resin or preferably 3-11% of the combined volume of composite fiber and resin structure. The carbon residue remaining from pyrolises resin does not convert to the high conductivity properties of the fibers and should therefore be the minimum necessary to hold the structure together.

Some treated sheets can be used for the substantial flat plates 21 and other treated sheets can be used to form specially configured fins 22. Is preferred that the fins be shape as corrugated fin structure.

The resin impregnated woven fin sheets 22 are pliable and can be shaped and formed into the desired fin geometry. Referring now to Fig 3. illustrations of two tools can be used to form the desired corrugated fin sheets are shown. A press fit tool is shown in Fig 3a to be comprised of a machined plate 40 having a series of articulated substantially parallel metal fingers 42 defining grooves 44 for receiving the fin weave 22 therein. The number of grooves/fingers per inch define the fins per inch and fin height of the resulting corrugated fin structure. The woven, impregnated sheets fins can be pressed into the grooves preferably using Teflon insertion strips.

Alternately, an interleaved tool 50 , illustrated in Fig 3b, can be used to wrap the resin impregnated woven fin sheets 22 around the edges of each metal plate or leave to form a corrugated fin sheet 22. The first leave 51 is moved to right toward the center and the second leave 52 is moved left toward the center forming a corrugation in the fin sheet 22. As successive leaves are moved toward the center additional corrugations are formed. The number of grooves/fingers per inch define the fins per inch and the fin height of the resulting corrugated fin structure is defined by the distance that the leaves overlap.

The resin impregnated carbon fins 22 are then stacked between and into an array of parallel plates 21 to achieved the structure shown in Figure 2. The plates 21 are preferably formed from the same type woven sheets and impregnated with the same resin type resin as the fin sheets 22. However the altemating fin sheets may be of different geometries and the weave of the plate sheets 21 and the fin sheets 22 may also be different. The stacked array 20 is then cured in a low temperature oven approximately 200-300°C to bond all the carbon/carbon pieces together. The curing is preferably done by slowly heating the impregnated structure at a rate no more than 2°C/min. to a curing temperature in the range 180-250°C for a time in the range 20 min. to 5 hours, and preferably under a compressive stress of 0.01-2 Mpa (mega pascals).

This impregnated and cured carbon fiber resin structure is now pyrolyzed according to a prescribed temperature-time schedule. A typical pyrolytic schedule includes heating the cured structure in an inert atmosphere or vacuum at a rate of 1-5°C/min. (preferably 2°C/min.) to a temperature in the range 900-1000°C for a time in the range 30 min. to 5 hours. The main purpose of the impregnation and curing/pyrolysis is to provide a structure having a desired shape and increased rigidity compared to the starting sheets, to thereby strengthen the structure to facilitate additional handling as well

The next step is densification of the structure by chemical vapor infiltration and chemical vapor deposition (CVI/CVD) of carbon, to achieve an overall bulk density in the range 1.70-2.20 g/cm³ and a microstructure of deposited carbon, for example rough-laminar carbon. Such densification may be carried out in a hot-wall, isothermal, isobaric CVI reactor, at temperatures in the range 900-1100°C, using carbon-containing vapor or gaseous precursors such as methane, ethane, ethylene, propane, butane, pentane, cyclopentane or hexane. A specific example may involve the use of flowing cyclopentane vapor (C₅H₁₀), either pure or diluted in argon, in the temperature range 1000 -1100°C to achieve densities in the range 1.70-1.95 g/cm³ in less than 12 h, with an overall conversion efficiency in the range 6-10% (conversion efficiency is defined as the amount of carbon incorporated as a solid in the preform divided by the amount of carbon introduced into the reactor in the precursor).

It is intended that the CVD/CVI treatment (a) fill the residual voids of the carbon/carbon preform with carbon and thereby achieve a density which is sufficiently high to ensure the desired mechanical, thermal and permeation/leak tightness properties of the composite after additional treatment, and (b) fill the residual voids with carbon having the desired microstructure, for example, rough-laminar, which after appropriate further annealing heat treatment will become more ordered and more graphitic and hence have the desired high thermal conductivity.

After densification the heat exchanger core is annealed in the temperature range 1800-3000°C to further improve the physical properties of the structure, by making both the fiber carbon and the matrix carbon present in the structure more orderly (render them more graphitic). This increases the in-plane and through plane components of the thermal conductivity by orders of magnitude, obtains the desired mechanical properties and improves the oxidative stability.

For some high temperature applications the carbon/carbon preform can be further treated to infiltrate and for coat the graphitized, densified structure with appropriate materials, which after proper heat treatment will provide sufficient oxidative stability and resistance and improved leak tightness for the intended applications. For example, a phosphates-based solution can be used to coat/infiltrate the carbon/carbon structure and after being heated treated to about 700°C in an inert atmosphere, such a coating may provide the carbon/carbon structure sufficient oxidation resistance for application at moderately high temperature.

Furthermore, SiC coatings, functionally-graded (SiC)ₓC₁₋ₓ coatings, Si₃N₄ coatings and other similar materials, alone or in combination, may be applied into and onto the graphitized, densified carbon/carbon structure to further improve its oxidation resistance and stability, either alone or in combination with phosphates-type coatings.

In accordance with this invention, it is recognized that a specific manufacturing procedure can be followed to fabricate a carbon/carbon parallel plate heat exchanger from these carbon/carbon materials. Various other modifications may be contemplated by those skilled in the art without departing from the present invention as here and after defined by the following claims. These procedures may be followed to fabricate heat exchangers of other geometries than shown in Figure 1. This would include counter flow designs where the two alternating fin passages are disposed in the same direction rather than in the transverse direction and to heat exchangers of shapes other than rectangular.

## Claims

1. A method of fabricating a parallel plate heat exchanger of carbon/carbon composite material comprising the steps of
providing a plurality of woven sheets of low modulus carbon fibres,
impregnating the woven sheets with resin,
shaping the sheets to form plates and fins,
stacking the fins 22 between said plates 21 to achieve a stacked plate assembly,
curing the assembly at a modest temperature to bond the plates and fins together,
pyrolyzing the assembly,
**characterised in that** the method further comprises densifying the pyrolyzed assembly by chemical vapour infiltration (CVI) and chemical vapour deposition (CVD) of carbon, to achieve an overall bulk density in the range 1.70-2.20 g/cm³ and a microstructure of deposited carbon substantially equivalent to rough-laminar carbon,
annealing in the temperature range of 1800-3000°C, and
infiltrating the assembly with antioxidant materials.

2. The method of fabricating a parallel plate heat exchanger from carbon/carbon composite material of claim 1 wherein woven sheets of low modulus fibres comprise pitch carbon fibres.

3. The method of fabricating a parallel plate heat exchanger of carbon *I* carbon composite material of claim 1 or claim 2 wherein the resin is selected from the group comprising phenolic, epoxy and carbon yielding resins.

4. The method of fabricating a parallel plate heat exchanger of carbon / carbon composite material of any of claims 1 to 3, wherein the pyrolytic heating includes heating the cured assembly in an inert atmosphere at a rate of 1-5°C/min. (preferably 2°C/min.) to a temperature in the range 900-1000°C for a time in the range 30 min. to 5 hours.

5. The method of fabricating a parallel plate heat exchanger of carbon / carbon composite material of any of claims 1 to 3, wherein the pyrolytic heating includes heating the cured assembly in a vacuum at a rate of 1-5°C/min. (preferably 2°C/min.) to a temperature in the range 900-1000°C for a time in the range 30 min. to 5 hours.

6. The method of fabricating a parallel plate heat exchanger of carbon / carbon composite material of any of claims 1 to 5, wherein the densification is carried out in a hot-wall, isothermal, isobaric CVI reactor, at temperatures in the range 900-1100°C, in an atmosphere comprising constituents selected from the class comprising carbon-containing vapor, gaseous precursors, methane, ethane, ethylene, propane, butane, pentane, cyclopentane or hexane.

## Patentansprüche

1. Verfahren zur Herstellung eines Parallelplatten-Wärmetauschers aus Kohlenstoff/Kohlenstoff-Verbundwerkstoff, bei dem man
mehrere Gewebebahnen aus niedrigmoduligen Kohlenstoffasern bereitstellt,
die Gewebebahnen mit Harz imprägniert,
die Bahnen zur Ausbildung von Platten und Rippen formt,
die Rippen 22 zwischen den Platten 21 stapelt, um eine gestapelte Plattenanordnung zu erhalten,
die Anordnung bei mäßiger Temperatur aushärtet, um die Platten und die Rippen miteinander zu verbinden, und
die Anordnung pyrolisiert,
**dadurch gekennzeichnet, daß** man bei dem Verfahren weiterhin die pyrolisierte Anordnung durch Gasphaseninfiltration (CVI) und Gasphasenabscheidung (CVD) von Kohlenstoff verdichtet, um eine Gesamtschüttdichte von ca. 1,70 - 2,20 g/cm³ und eine Mikrostruktur von abgeschiedenem Kohlenstoff, die im wesentlichen groblaminarem Kohlenstoff gleichkommt, zu erhalten,
in einem Temperaturbereich von 1800 - 3000°C glüht und
die Anordnung mit Antioxidantien infiltriert.

2. Verfahren zur Herstellung eines Parallelplatten-Wärmetauschers aus Kohlenstoff/Kohlenstoff-Verbundwerkstoff nach Anspruch 1, bei dem Gewebebahnen aus niedrigmoduligen Fasern aus auf Pech basierendem Kohlenstoff bestehen.

3. Verfahren zur Herstellung eines Parallelplatten-Wärmetauschers aus Kohlenstoff/Kohlenstoff-Verbundwerkstoff nach Anspruch 1 oder 2, bei dem das Harz aus der Gruppe umfassend Phenol-, Epoxid- und kohlenstoffabgebende Harze ausgewählt ist.

4. Verfahren zur Herstellung eines Parallelplatten-Wärmetauschers aus Kohlenstoff/Kohlenstoff-Verbundwerkstoff nach einem der Ansprüche 1 bis 3, bei dem das pyrolytische Erhitzen ein Erhitzen der ausgehärteten Anordnung in einer inerten Atmosphäre über einen Zeitraum von 30 Minuten bis 5 Stunden bei einer Rate von 1 - 5°C/min (vorzugsweise 2°C/min) auf eine Temperatur von 900 - 1000°C umfaßt.

5. Verfahren zur Herstellung eines Parallelplatten-Wärmetauschers aus Kohlenstoff/Kohlenstoff-Verbundwerkstoff nach einem der Ansprüche 1 bis 3, bei dem das pyrolytische Erhitzen ein Erhitzen der ausgehärteten Anordnung in einem Vakuum über einen Zeitraum von 30 Minuten bis 5 Stunden bei einer Rate von 1 - 5°C/min (vorzugsweise 2°C/min) auf eine Temperatur von 900 - 1000°C umfaßt.

6. Verfahren zur Herstellung eines Parallelplatten-Wärmetauschers aus Kohlenstoff/Kohlenstoff-Verbundwerkstoff nach einem der Ansprüche 1 bis 5, bei dem die Verdichtung in einem isothermen, isobaren CVI-Heißwandreaktor bei Temperaturen von 900 - 1100°C in einer Atmosphäre durchgeführt wird, die Bestandteile ausgewählt aus der Klasse umfassend kohlenstoffenthaltenden Dampf, gasförmige Vorläufer, Methan, Ethan, Ethylen, Propan, Butan, Pentan, Cyclopentan oder Hexan umfaßt.

## Revendications

1. Procédé de fabrication d'un échangeur de chaleur à plaques parallèles en matière composite carbone-carbone, comprenant les étapes de
fourniture d'une pluralité de feuilles tissées de fibres de carbone à faible module,
imprégnation des feuilles tissées avec une résine, façonnage des feuilles afin de former des plaques et des nervures,
empilage des nervures 22 entre lesdites plaques 21 afin d'obtenir un ensemble de plaques empilées,
cuisson de l'assemblage à une faible température afin de lier les plaques et les nervures ensemble, pyrolyse de l'ensemble,
**caractérisé en ce que** le procédé comprend en outre la densification de l'ensemble pyrolysé par infiltration chimique en phase vapeur (CVI) et par dépôt chimique en phase vapeur (CVD) de carbone, afin d'obtenir une densité volumique totale se situant dans la gamme allant de 1,70 à 2,20 g/cm³ et une microstructure de carbone déposé substantiellement équivalente à du carbone grossièrement laminaire,
recuit dans une gamme de température allant de 1800°C à 3000°C, et
infiltration de l'ensemble avec des matières anti-oxydantes.

2. Procédé de fabrication d'un échangeur de chaleur à plaques parallèles en matière composite carbone-carbone de la revendication 1, dans lequel les feuilles tissées de fibres à faible module comprennent des fibres de carbone de goudron.

3. Procédé de fabrication d'un échangeur de chaleur à plaques parallèles en matière composite carbone-carbone de la revendication 1 ou 2, dans lequel la résine est sélectionnée à partir d'un groupe comprenant des résines phénoliques, époxy et cédant du carbone.

4. Procédé de fabrication d'un échangeur de chaleur à plaques parallèles en matière composite carbone-carbone de l'une quelconque des revendications 1 à 3, dans lequel le chauffage de pyrolyse comprend le chauffage de l'ensemble cuit dans une atmosphère inerte à une vitesse de 1-5°C/minute (de préférence 2°C/minute) jusqu'à une température se situant dans la gamme allant de 900°C à 1000°C pendant une durée allant de 30 minutes à 5 heures.

5. Procédé de fabrication d'un échangeur de chaleur à plaques parallèles en matière composite carbone-carbone de l'une quelconque des revendications 1 à 3, dans lequel le chauffage de pyrolyse comprend le chauffage de l'ensemble cuit sous vide à une vitesse de 1-5°C/minute (de préférence 2°C/minute) jusqu'à une température se situant dans la gamme allant de 900°C à 1000°C pendant une durée allant de 30 minutes à 5 heures.

6. Procédé de fabrication d'un échangeur de chaleur à plaques parallèles en matière composite carbone-carbone de l'une quelconque des revendications 1 à 5, dans lequel la densification est exécutée dans un réacteur CVI isobare isotherme à parois chaudes, à des températures se situant dans la gamme allant de 900°C à 1100°C, dans une atmosphère comprenant des constituants sélectionnés à partir de la classe comprenant la vapeur contenant du carbone, des précurseurs gazeux, le méthane, l'éthane, l'éthylène, le propane, le butane, le pentane, le cyclopentane ou l'hexane.
